# EUROPEAN PATENT APPLICATION

(11) **EP 1 757 469 A1**
(43) Date of publication of application: **28.02.2007**
(21) Application number: 06119386.8
(22) Date of filing: 23.08.2006
(51) Int. Cl.: B60G 17/00, B62D 5/04

(54) **Motor vehicle including a steering system and suspension elements**

(30) Priority: 24.08.2005 JP 2005242488
(71) Applicant: JTEKT CORPORATION, Chuo-ku Osaka-shi Osaka 542-8502 (JP)
(72) Inventor: Takeuchi, Shinji, Osaka Osaka 542-8502 (JP); Yamakawa, Tomonari, Osaka Osaka 542-8502 (JP)
(74) Representative: TBK-Patent

(57) **Abstract**

A turning device that can be combined with a suspension mechanism without requiring significant modification to existing suspension mechanisms, and that provides a compact design when combined with a suspension mechanism. In a turning device according to the present invention, a main device unit, containing a turning motor and a differential speed reducer, and a turning output member that rotates relative to the main device unit are positioned roughly co-axially with a kingpin shaft. This makes it possible to reduce the amount by which the turning device projects in the direction perpendicular to the kingpin shaft. As a result, compared to conventional technologies, the turning device can be combined without significantly modifying the structure of an existing double wishbone suspension mechanism, and the overall structure that combines the double wishbone suspension mechanism and the turning device can be made compact.

## Description

### Technical field

The present invention relates to a turning device that allow a plurality of turning wheels equipped on a vehicle to be turned independently.

### Background

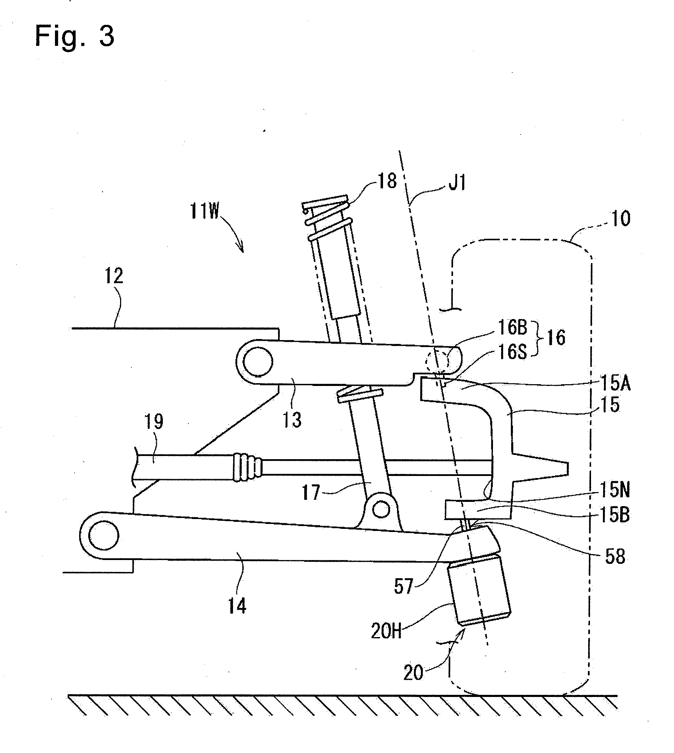

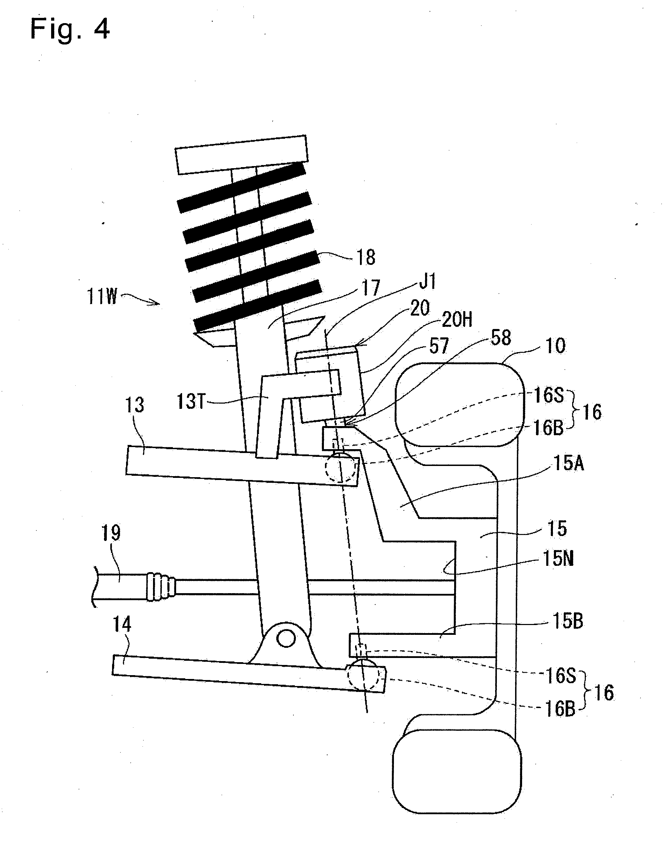

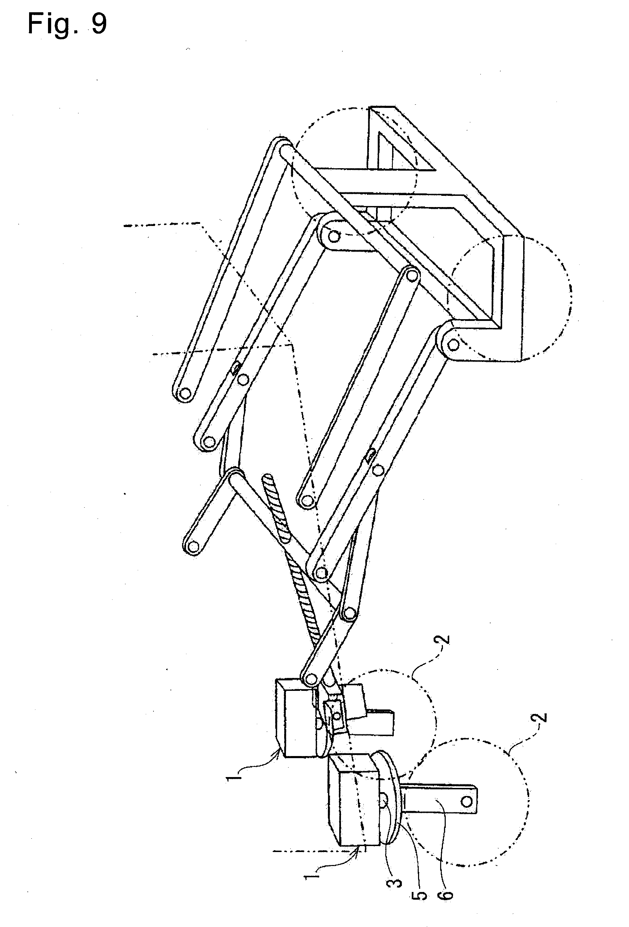

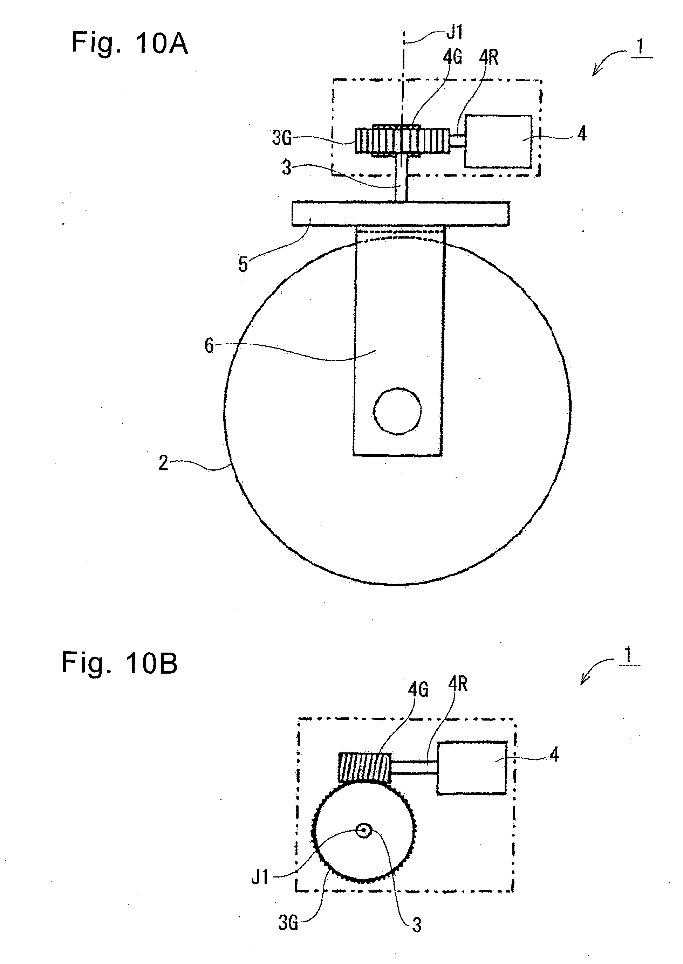

An example of a conventional turning device of this type is a turning device 1 shown in Fig. 9 for installation in a concept car. Turning devices 1 are provided above left and right turning wheels 2, 2. As shown in Fig. 10A, a vertically oriented vertical output shaft 3 is rotated with a turning motor 4. The rotation shaft of the turning motor 4 is oriented horizontally, and a worm gear 4G is secured to a rotor shaft 4R of the turning motor 4 (*see,* Fig. 10B). The worm gear 4G is meshed with a worm wheel 3G secured to the vertical output shaft 3. Also, a rotating disc 5 is secured to a lower end of the vertical output shaft 3, and a lower end of an arm 6 projecting downward from the rotating disc 5 rotatably supports the turning wheel 2. As a result, when the turning motor 4 rotates the vertical output shaft 3, the turning wheels 2 turn around a kingpin axis J1 at the rotational center of the vertical output shaft 3 (e.g., *see,* Japanese Laid-Open Patent Publication Number 2005-112300 paragraph [0024], Figs. 3 and 4).

In order to absorb vibrations caused by an uneven road surface, vehicles require a suspension mechanism. In the typical examples of double wishbone suspension mechanisms and strut suspension mechanisms, movable arms are extended roughly horizontally and transversally from the main vehicle body, and hub carriers connected at the ends of the movable arms provide rotational support for hub discs. The hub disc is secured to a turning wheel, and the turning wheel is turned around the kingpin axis, which passes through the connecting section between the movable arm and the hub carrier.

However, in the conventional turning device 1, the turning motor 4 and the vertical output shaft 3 are connected to each other by way of the worm wheel 3G and the worm gear 4G, so that the turning motor 4 is positioned away from the kingpin axis J1 (see, Fig. 10B). Thus, installing the turning device 1 requires an installation space that is wide along the axis perpendicular to the kingpin axis J1.

Thus, if the turning device 1 is to be installed with the center of rotation of the vertical output shaft 3 aligned with the kingpin axis of an existing suspension mechanism, the turning device 1 is obstructed by at least the hub carrier. In order to prevent this, the existing suspension mechanism must be modified significantly, and the combination of the turning device 1 and the suspension mechanism becomes larger.

The object of the present invention is to overcome these problems and to provide a turning device that makes it possible to install the device on an existing suspension mechanism without significant modifications to the suspension mechanism and that makes it possible to provide a compact design for the device combined with a suspension mechanism.

### Summary of the Invention

In order to achieve the objects described above, the invention provides a turning device in a vehicle equipped with a suspension mechanism including a hub carrier rotatably supporting a hub disc to which is secured a turning wheel and a movable arm extended roughly horizontally between the hub carrier and the main vehicle body and that can tilt up and down one turning device is provided for each turning wheel to turn the turning wheel. In the turning device, a turning motor, a main device unit containing a stator of the turning motor, and a turning output section rotated relative to the main device unit by the turning motor, are positioned roughly co-axial to a kingpin axis. The kingpin axis serves as a center point of rotation of the turning wheel. The main device unit is secured to the hub carrier and the turning output section is secured to the movable arm by way of a constant velocity joint, or the turning output section is secured to the hub carrier and the main device unit is secured to the movable arm by way of a constant velocity joint.

An embodiment of the invention is a turning device according to the above wherein the suspension mechanism is a double wishbone suspension mechanism equipped with an upper arm and a lower arm that face each other and serve as the movable arm. The hub carrier can be supported between ends of the upper arm and the lower arm. The main device unit is positioned in a region between the upper arm and the lower arm and is secured to the hub carrier.

The invention according to a further embodiment is a turning device wherein the suspension mechanism is a double wishbone suspension mechanism equipped with an upper arm and a lower arm that face each other and serve as the movable arm, the hub carrier being supported between ends of the upper arm and the lower arm. The main device unit is secured to an upper surface side of the upper arm or a lower surface side of the lower arm.

The invention according to an embodiment is a turning device according to the above wherein the suspension mechanism is a strut suspension mechanism in which the movable arm is connected to a lower end of the hub carrier. Further, an upper end of the hub carrier is connected with the main vehicle body by a damper extending co-axial with the kingpin axis. The main device unit is positioned in a region between the movable arm and the damper and is secured to the hub carrier.

An embodiment of the invention wherein the suspension mechanism is a strut suspension mechanism in which the movable arm is connected to a lower end of the hub carrier, and an upper end of the hub carrier is connected with the main vehicle body by a damper extending co-axial with the kingpin axis. The main device unit is secured to a lower surface side of the movable arm.

A further embodiment is a strut suspension mechanism including a hub carrier rotatably supporting a hub disc to which is secured a turning wheel and a movable arm extended roughly horizontally between a lower end of the hub carrier and the main vehicle body and that can tilt up and down relative to the main vehicle body. A damper is positioned co-axial with a kingpin axis, serving as a turning center for the turning wheel. The damper extends diagonally upward from an upper end of the hub carrier and expanding and contracting between the main vehicle body and the hub carrier. One turning device can be provided for each of the turning wheel to turn the turning wheel. A turning motor, a main device unit containing a stator of the turning motor, and a turning output section rotated relative to the main device unit by the turning motor, are positioned roughly co-axial to the kingpin axis. The main device unit is positioned between a lower end of the damper and an upper end of the hub carrier. The main device unit can be secured to the lower end of the damper and the turning output section can be secured to the upper end of the hub carrier, or the turning output section being secured to the upper end of the hub carrier and the main device unit being secured to the lower end of the damper.

The invention according to any one of the above embodiments having a speed reducer with an input shaft and an output shaft positioned co-axially in the main device unit. The input shaft of the speed reducer is connected to a rotation shaft of the turning motor while the output shaft of the speed reducer is connected to the turning output section. Also, the turning motor can be a direct drive motor and a stator of the direct drive motor forms the main device unit. A rotor of the direct drive motor forms the turning output section. Additionally, the suspension mechanism can be a multi-link suspension mechanism.

A further embodiment is a turning device in a vehicle equipped with a multi-link suspension mechanism including a hub carrier rotatably supporting a hub disc to which is secured a turning wheel and a movable arm extended roughly horizontally between a lower end of the hub carrier and the main vehicle body and that can tilt up and down relative to the main vehicle body. Further, a damper can be positioned along an axis parallel with a kingpin axis, serving as a point of rotation for the turning wheel. The damper extends diagonally upward from an upper end of the hub carrier and expands and contracts between the main vehicle body and the hub carrier. One turning device can be provided for each of the turning wheel to turn the turning wheel. A turning motor, a main device unit containing a stator of the turning motor, and a turning output section rotated relative to the main device unit by the turning motor, are positioned roughly co-axial to the kingpin axis. The main device unit is positioned between a link member secured to the damper and an upper end of the hub carrier, the main device unit being secured to the link member and the turning output section being secured to the upper end of the hub carrier, or the main device unit being secured to the upper end of the hub carrier and the turning output section being secured to the link member.

In an embodiment, a turning motor, a main device unit, and a turning output section rotate relative to the main device unit are positioned roughly co-axially to a kingpin axis, which serves as a center of rotation of the turning wheel. Thus, the turning device does not project in the direction perpendicular to the kingpin axis. Since the main device unit is secured to either the hub carrier or the movable arm, and the turning output section is secured by way of the constant velocity joint to the remaining element, the turning wheels can be turned relative to the main vehicle body by driving the turning motors. Also, the constant velocity joint can absorb changes in the angle between the movable arm and the hub carrier that take place when the movable arm pivots up and down. As a result, compared to conventional turning devices, the turning device can be installed without significantly modifying the structure of the existing suspension mechanism. The combination of the suspension mechanism and the turning device can made compact.

In a vehicle in which the turning wheels are not driven, the region of a double wishbone suspension mechanism between the upper arm and the lower arm forms a dead space. The turning device of the present invention is provided in this dead space, thus conserving space.

In a vehicle in which the turning wheels are driven, a drive shaft for rotating the turning wheel is positioned between the upper arm and the lower arm of a double wishbone suspension mechanism. The turning device has the relatively large main device unit secured to the upper surface side of the upper arm of the lower surface side of the lower arm. This provides space for the drive shaft between the upper arm and the lower arm. In a vehicle in which the turning wheels are not driven, the region in a strut suspension mechanism between the movable arm and the damper forms a dead space and the turning device is placed in this dead space, thus conserving space.

In a vehicle in which the turning wheels are driven, a drive shaft rotating the turning wheel is provided in the region in a strut suspension between the damper and the movable arm. In the strut suspension mechanism, the main device unit of the turning device, which is relatively large, is secured to the lower surface side of the movable arm. This provides space between the damper and the movable arm to place the drive shaft.

In an embodiment, a turning motor, a main device unit, and a turning output section rotate relative to the main device unit are positioned roughly co-axially to a kingpin axis, which serves as a center of rotation of the turning wheel. Thus, the turning device is not projected in the direction perpendicular to the kingpin axis. As a result, compared to conventional turning devices, the turning device can be installed without significantly modifying the structure of the existing strut suspension mechanism. The combination of the strut suspension mechanism and the turning device can made compact.

In a further embodiment, the output from the turning motor can be reduced with a speed reducer positioned along the same axis as the turning motor and transferred to the turning output section. Also, the turning motor is a direct drive motor. This makes it possible to generate a relative large output torque to apply to the hub carrier without using a speed reduction mechanism. The present invention can also be implemented as a turning device for vehicles with a multi-link suspension mechanism

### Brief Description of the Drawings

Fig. 1 illustrates a side-view drawing of a double wishbone suspension mechanism and turning device according to an embodiment of the present invention;
Fig. 2 illustrates a side-view cross-section drawing of a turning device;
Fig. 3 illustrates a side-view drawing of a double wishbone suspension mechanism and turning device according to another embodiment of the present invention;
Fig. 4 illustrates a side-view drawing of a double wishbone suspension mechanism and turning device according to a further embodiment of the present invention;
Fig. 5 illustrates a side-view drawing of a strut suspension mechanism and turning device according to an embodiment;
Fig. 6 illustrates a side-view drawing of a strut suspension mechanism and turning device according to another embodiment;
Fig. 7 illustrates a side-view drawing of a strut suspension mechanism and turning device according to a further embodiment;
Fig. 8 illustrates a side-view cross-section drawing of a turning device;
Fig. 9 illustrates a perspective drawing of a vehicle equipped with a conventional turning device;
Fig. 10A illustrates a side-view drawing of a conventional turning device; and
Fig. 10B illustrates a plan drawing of a conventional turning device.

### Detailed Description of the Embodiment

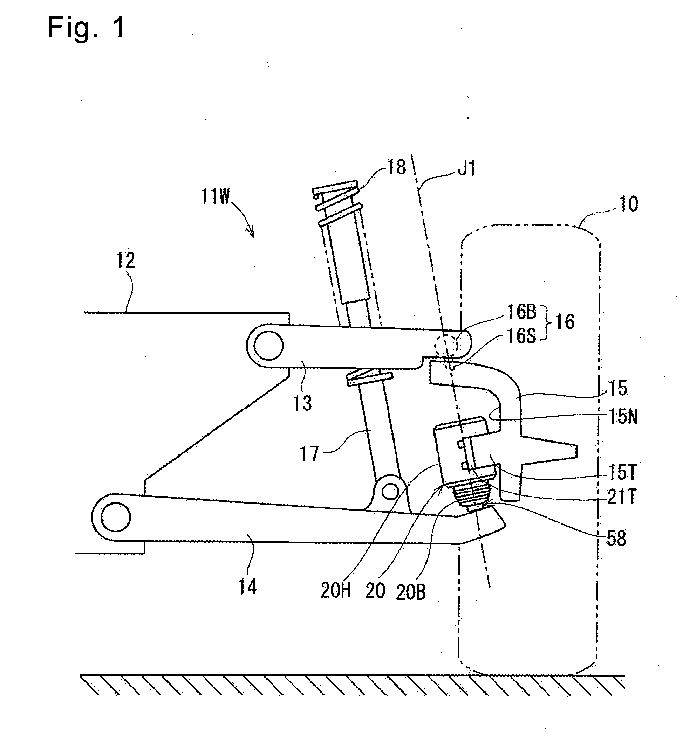

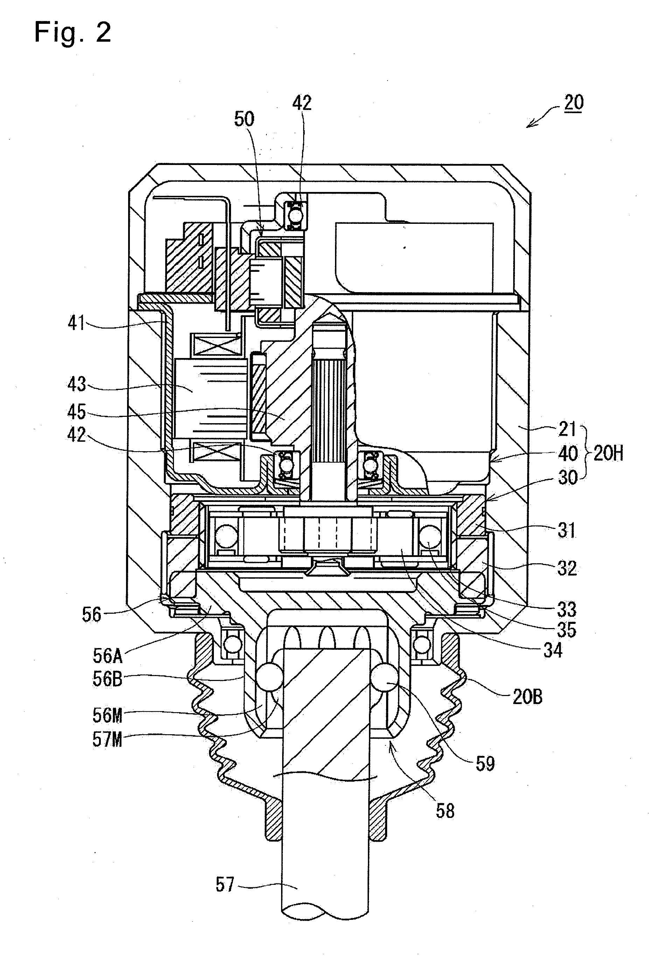

Referring to Fig. 1 and Fig. 2, an embodiment of the present invention is illustrated. Fig. 1 shows a double wishbone suspension mechanism 11W that supports front wheels 10 of the vehicle (corresponds to the "turning wheels" of the present invention). The double wishbone suspension mechanism 11W is equipped with an upper arm 13 and a lower arm 14 extended horizontally and transversally from the main vehicle body 12. The upper arm 13 and the lower arm 14 face each other from top and bottom and are connected to the main vehicle body 12 so that they can tilt up and down. The upper arm 13 is shorter than the lower arm 14, with a tilting support section of the main vehicle body 12 for the upper arm 13 being positioned that much further toward the front wheel 10 compared to the tilting support section for the lower arm 14. The ends of the upper arm 13 and the lower arm 14 extend toward the front wheel 10 to roughly the same position, and a hub carrier 15 is supported between the ends of the upper arm 13 and the lower arm 14. A hub disc (not shown in the figures) is rotatably supported by the hub carrier 15, and the front wheel 10 is secured to the hub disc.

A lower end of a damper 17 is tiltably connected to the lower arm 14 at a position toward the free end. The damper 17 extends diagonally inward and upward from the lower arm 14, passes through the upper arm 13, and is connected to a position of the main vehicle body 12 that is diagonally upward from the front wheel 10 (not shown in the figure). A compression spring 18 is inserted over the damper 17 toward the upper end thereof, and the compression spring 18 expands and contracts in tandem with the expansion and compression of the damper 17.

The free end of the upper arm 13 and the upper end of the hub carrier 15 are connected by a ball joint 16. This ball joint 16 is formed with a shaft 16S extending from a ball section 16B rotatably supported by the upper arm 13. The shaft 16S is secured to the upper end of the hub carrier 15.

A turning device 20 according to the embodiment of the present invention is secured to an inner surface 15N of the hub carrier 15 facing inward along a roughly horizontal and transverse direction. As shown in Fig. 2, in a main device unit 20H of the turning device 20, a cylindrical main case unit 21 houses a differential speed reducer 30 and a turning motor 40. The differential speed reducer 30 and the turning motor 40 both are formed overall with a roughly cylindrical shape and are arranged co-axially in the main case unit 21. More specifically, the turning motor 40 is equipped with a motor housing 41 fitted and secured in the main case unit 21 and a stator 43 is secured to the inner surface of the motor housing 41. Also, a rotor 45 is inserted through the stator 43 and is rotationally supported by bearings 42, 42 positioned at the ends of the motor housing 41. Furthermore, at the upper end of the turning motor 40, there is provided a rotation position sensor 50 (e.g., a resolver), and this position sensor 50 can detect the rotational position of the rotor 45.

The differential speed reducer 30 is housed in the main case unit 21 at the lower end of the turning motor 40. The differential speed reducer 30 is equipped with an input rotation ring 31 and an output rotation ring 32, positioned co-axially. The input rotation ring 31 is secured to the main case unit 21, and the output rotation ring 32 is rotatably supported by the main case unit 21. Multiple fine teeth are formed on the inner perimeter surfaces of the input rotation ring 31 and the output rotation ring 32. For example, the teeth count of the input rotation ring 31 can be less by 2n (where "n" is an integer of 1 or more) teeth than that of the output rotation ring 32. Also, the flexible ring 33 is fitted into both the input rotation ring 31 and the output rotation ring 32. Multiple fine teeth that can mesh with the teeth of the input rotation ring 31 and the output rotation ring 32 are formed on the outer perimeter surface of the flexible ring 33.

A motor input disc 34 is provided inside the flexible ring 33, and multiple balls 35 are provided between the motor input disc 34 and the flexible ring 33. The motor input disc 34 is formed with a roughly elliptical outer perimeter shape. As a result, the flexible ring 33 is elastically deformed into a roughly elliptical shape to match the motor input disc 34, and the teeth of the flexible ring 33 and the teeth of the input rotation ring 31 and the output rotation ring 32 mesh at two positions along the perimeter.

The motor input disc 34 is connected to the rotor 45 of the turning motor 40 so that they rotate in tandem. When the turning motor 40 causes the motor input disc 34 to rotate, the meshing positions of the flexible ring 33 and the input rotation ring 31 and the output rotation ring 32 move along the perimeter, and the output rotation ring 32 rotates more than the input rotation ring 31 based on the lower teeth count (2n teeth). In other words, the output rotation ring 32 moves in a differential manner relative to the input rotation ring 31.

A turning output member 56 (corresponding to the "turning output section" of the present invention) is provided below the input rotation ring 31. In the turning output member 56, a cylindrical section 56B projects from the center of the bottom surface of a disc 56A. A fixed strut 57 is projected upward from the end of the lower arm 14. The upper end of the fixed strut 57 is housed in the cylindrical section 56B, and a constant velocity joint 58 is formed from the fixed strut 57 and the cylindrical section 56B. More specifically, the upper end of the fixed strut 57 is shaped with a section that expands to the side, and multiple vertical grooves 57M are formed along the perimeter surface of the expanded section. Corresponding vertical grooves 56M are also formed on the inner perimeter surface of the cylindrical section 56B, and balls 59 are provided where these vertical grooves 56M of the cylindrical section 56B face the vertical grooves 57M of the fixed strut 57. As a result, the cylindrical section 56B and the fixed strut 57 are connected so that they can tilt relative to each other in all directions, while the turning output member 56 and the fixed strut 57 are connected so that they can rotate in tandem. The constant velocity joint 58 is covered by a rubber boot 20B.

The turning device 20 is secured to the hub carrier 15 so that the center axis of the main device unit 20H (i.e., the center axes of the turning motor 40 and the differential speed reducer 30) lies on a line that connects the center of the cylindrical section 56B of the constant velocity joint 58 and the center of the ball section 16B of the ball joint 16 (see Fig. 1). As shown in Fig. 1, a pair of facing projections 21T can, for example, be projected from the side surface of the main case unit 21 (only one facing projection 21T is shown in Fig. 1), and corresponding to this, a pair of pedestal projections 15T can be projected from the hub carrier 15. Then, the pedestal projections 15T and the facing projections 21T are brought together and a bolt passing through the facing projections 21T is used to secure the main case unit 21 to the hub carrier 15.

The structure of the turning device 20 of this embodiment is as described above. Separate turning devices 20 are provided for the left and right front wheels of the vehicle, and these form a section of a steer-by-wire system. In this vehicle, a steering wheel (handle) and the front wheels 10 are mechanically separated. The steering angle of the steering wheel is detected by a steering angle sensor (not shown in the figures). Based on the detection result of the steering angle sensor, a steering control device (not shown in the figures) drives the turning motors 40 of the turning devices 20 and turns the front wheels 10. More specifically, when the turning motor 40 is driven, the turning output member 56 rotates relative to the main device unit 20H. Since the turning output member 56 is secured to the lower arm 14 by way of the constant velocity joint 58, the main device unit 20H rotates relative to the lower arm 14, and the hub carrier 15 along with the main device unit 20H turns relative to the upper arm 13 and the lower arm 14. As a result, the front wheel 10 turns with the central axis of the main device unit 20H serving as the kingpin axis J1.

When the vehicle passes over uneven road surface, the upper arm 13 and the lower arm 14 tilt vertically, raising and lowering the front wheels 10 relative to the main vehicle body 12. The damper 17 and the compression spring 18 absorb the shock caused by the uneven road surface. When the upper arm 13 and the lower arm 14 tilt, the angle between the hub carrier 15 and the upper arm 13 and the angle between the hub carrier 15 and the lower arm 14 change slightly. In this embodiment, these angle changes can be absorbed by the ball joint 16 and the constant velocity joint 58.

With the turning device 20 according to this embodiment, the main device unit 20H, which includes the turning motor 40 and the differential speed reducer 30, and the turning output member 56, which rotates relative to the main device unit 20H, are positioned along roughly the same axis as the kingpin axis J1. Thus, the turning device 20 is prevented from being projected in the direction perpendicular to the kingpin axis J1. As a result, compared to conventional turning devices, the turning device 20 can be installed without significantly changing the structure of an existing double wishbone suspension mechanism. Also, the double wishbone suspension mechanism 11W and the turning device 20 can be combined in a manner that results in a compact structure. Also, with this embodiment, the turning device 20 can be installed in the dead space of the double wishbone suspension mechanism 11W between the upper arm 13 and the lower arm 14, thus conserving space. This makes it possible to combine the double wishbone suspension mechanism 11W and the turning device 20 in an even more compact manner.

Fig. 3 shows another embodiment, in which the primary difference from the previous embodiment is the position of the turning device 20. In the following description, elements similar to those from the above embodiment are assigned like numerals and overlapping descriptions will be omitted. Only structures different from those of the previous embodiment are described.

In this embodiment, the main device unit 20H of the turning device 20 is secured to the lower surface side of the lower arm 14. Also, the cylindrical section 56B (see Fig. 2) of the turning output member 56 is rotatably positioned in a through-hole (not shown in the figure) that passes all the way through the lower arm 14. The fixed strut 57 is secured to a lower projection 15B projecting from the lower end of the hub carrier 15 and is projected downward. The lower end of the fixed strut 57 is housed in the cylindrical section 56B, forming the constant velocity joint 58 described above. In the turning device of this embodiment, a rubber boot 20B is not provided.

The vehicle for this embodiment can be, for example, a front engine, front wheel drive (FF) car, in which the front wheels 10 are driven. A drive shaft 19 is provided between the upper arm 13 and the lower arm 14, and the end of the drive shaft 19 passes through the hub carrier 15 and is secured to a hub disc (not shown in the figure).

The structure of this embodiment is as described above. The turning device 20 according to this embodiment has the turning output member 56, which in the turning device 20 is relatively small, secured to the hub carrier 15, while the relatively large main device unit 20H is secured to the lower surface side of the lower arm 14. This makes it possible to provide space for the drive shaft 19 between the upper arm 13 and the lower arm 14. The overall structure when the turning device 20 and the double wishbone suspension mechanism 11W and the drive shaft 19 are combined is also made compact.

Fig. 4 shows another embodiment, which differs from the previous embodiment in the position of the turning device 20. In the following description, elements similar to those above are assigned like numerals and overlapping descriptions are omitted. Only structures different from those of the previous embodiment are described.

In this embodiment, the shaft 16S of the ball joint 16 between the upper arm 13 and the hub carrier 15 is projected upward from the upper arm 13. An upper projection 15A projecting from the upper end of the hub carrier 15 is positioned above the end of the upper arm 13, and the shaft 16S is secured at that point. An identical ball joint 16 is also provided between the end of the lower arm 14 and the lower projection 15B of the hub carrier 15.

A device support wall 13T is projected upward from the upper arm 13. The main device unit 20H of the turning device 20 is secured to the device support wall 13T. Also, the fixed strut 57 is projected upward from the end of the upper projection 15A, and the constant velocity joint 58 is formed from the cylindrical section 56B (not shown in the figure) of the turning device 20 and the fixed strut 57. The structure of this embodiment provides operations and advantages similar to those of the above embodiment.

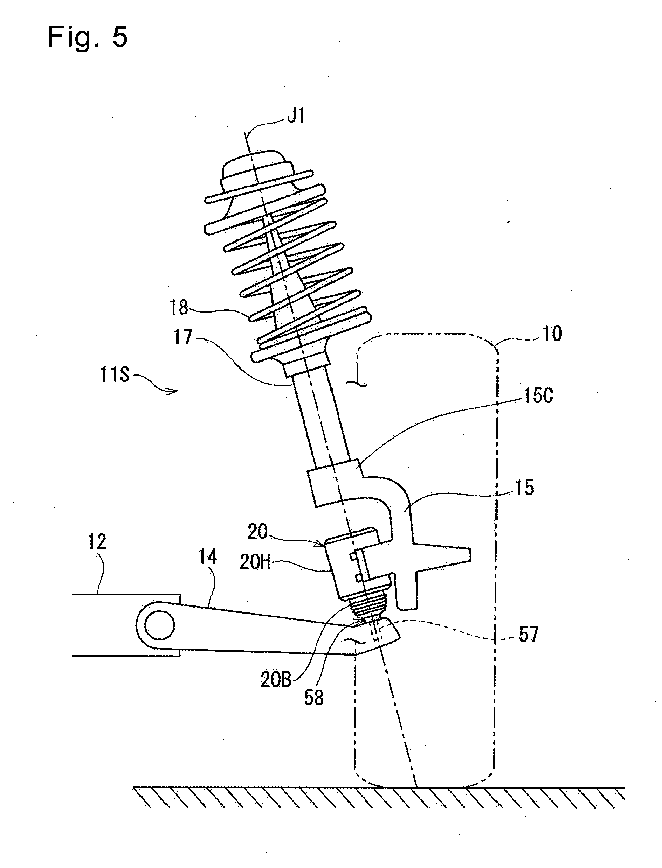

Fig. 5 shows an embodiment in which the front wheels 10 supported by a strut suspension mechanism 11S are turned by the turning device 20. In the strut suspension mechanism 11S, a damper support 15C is provided at the upper end of the hub carrier 15. The lower end of the damper 17 is connected to the damper support 15C so that rotation is possible but linear motion is not. The upper end of the damper 17 is secured so that it can tilt relative to the main vehicle body 12 and so that it cannot rotate around the axis of the damper 17. The damper 17 is extended co-axially with the kingpin axis J1 at the turning center of the front wheel 10. The turning device 20 secured to the hub carrier 15 and the end of the lower arm 14 (corresponds to the "movable arm" of the strut suspension in the present invention) are connected by way of the constant velocity joint 58. Other aspects of the structure are identical to those of the previous embodiments, so like elements are assigned like numerals and overlapping descriptions are omitted.

In this embodiment, the main device unit 20H, which includes the turning motor 40 and the differential speed reducer 30, and the turning output member 56, which rotates relative to the main device unit 20H, are positioned roughly co-axially with the kingpin axis J1. Thus, the turning device 20 is prevented from being projected in the direction perpendicular to the kingpin axis J1. As a result, compared to conventional turning devices, the turning device 20 can be installed without significantly changing the structure of an existing strut suspension mechanism. Also, the strut suspension mechanism 11S and the turning device 20 can be combined in a manner that results in a compact structure. Also, with this embodiment, the turning device 20 can be installed in the dead space of the strut suspension mechanism 11S between the lower arm 14 and the section of the hub carrier 15 connected with the damper 17, thus conserving space.

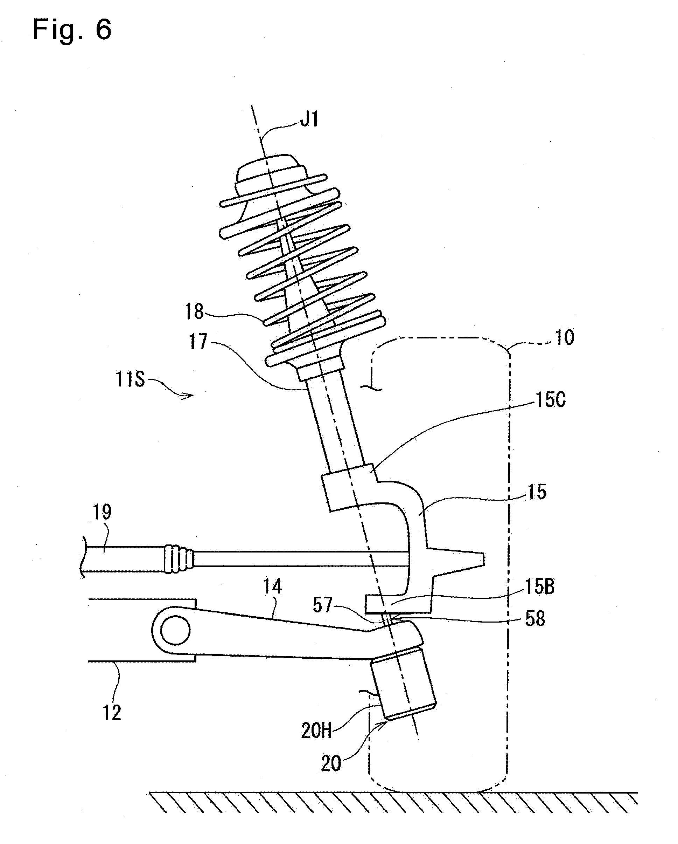

The embodiment of Fig. 6 differs from the above embodiments primarily in the fact that the main device unit 20H of the turning device 20 is secured to the lower surface side of the lower arm 14. The connecting structure between the hub carrier 15 and the turning output member 56 of the turning device 20 is the same as that of the previous embodiment. Apart from these aspects, the structure is the same as that of the other embodiment. Like elements are assigned like numerals and overlapping descriptions are omitted.

In this embodiment, the main device unit 20H of the turning device 20 is secured to the lower surface side of the lower arm 14 of the strut suspension mechanism 11S. This makes it possible to provide space for the drive shaft 19 between the damper 17 and the lower arm 14. As a result, the combination of the turning device 20 and the strut suspension mechanism 11S and the drive shaft 19 can be made compact.

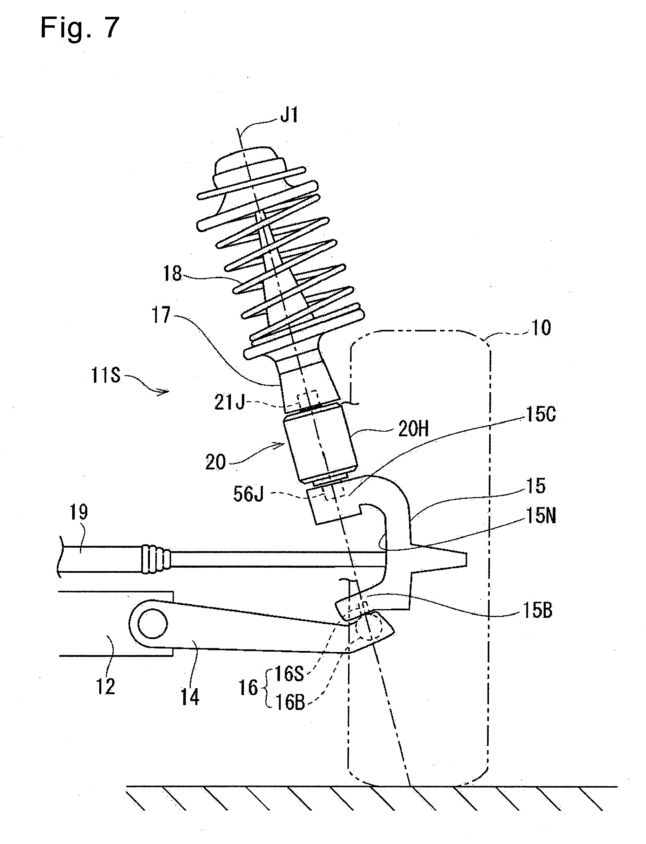

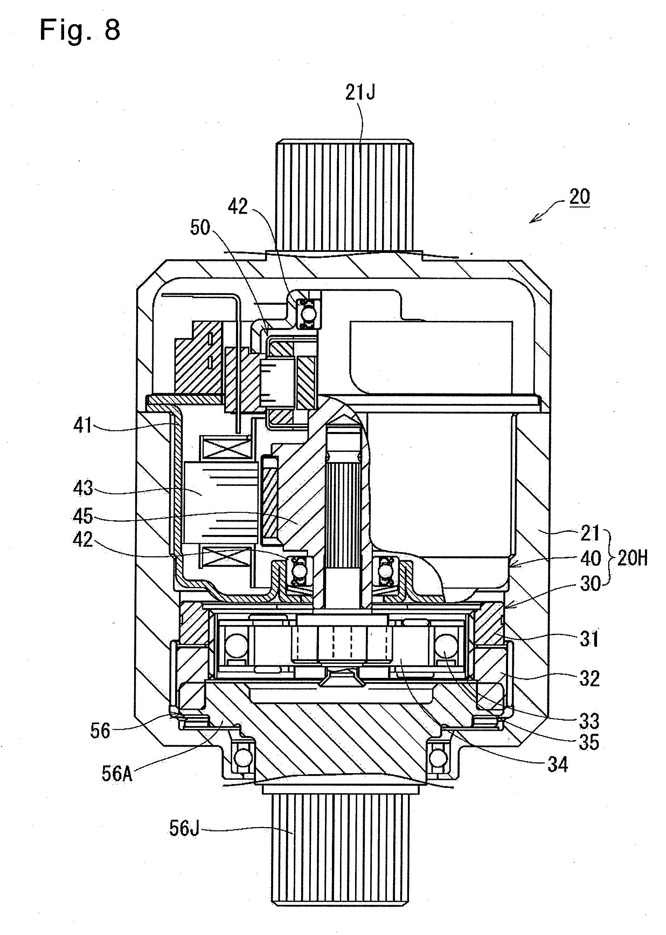

This embodiment is shown in Fig. 7 and Fig. 8. The following description will only cover aspects different from the previous embodiments. Similarly, elements are assigned like numerals and overlapping descriptions are omitted.

As shown in Fig. 7, in this embodiment, the turning device 20 according to the embodiment of the present invention is attached between an upper projection 15C and the damper 17. In the turning output member 56 of the turning device 20, a lower connecting shaft 56J is projected from the center of the lower surface of the disc 56A. Also, an upper connecting shaft 21J is projected co-axially with the lower connecting shaft 56J from the upper end of the main case unit 21. Vertical grooves are formed on the outer perimeter surfaces of both the lower connecting shaft 56J and the upper connecting shaft 21J. The lower connecting shaft 56J is inserted into a shaft insertion hole formed on the upper projection 15C of the hub carrier 15 and secured to prevent rotation. The upper connecting shaft 21J is inserted into a shaft insertion hole formed on the lower end of the damper 17 and secured to prevent rotation.

A ball joint 16 connects the lower projection 15B of the hub carrier 15 and the end of the movable arm 14. More specifically, the ball section 16B of the ball joint 16 is rotatably supported by the movable arm 14, and the shaft 16S projecting upward from the ball section 16B is secured to the lower projection 15B of the hub carrier 15.

The turning device 20 according to this embodiment is as described above. The structure of this embodiment provides operations and advantages similar to those of the above embodiments.

The present invention is not restricted to the embodiments above. For example, the embodiments described below fall within the technical scope of the present invention, and other modifications not described below may also be made without departing from the spirit of the present invention.

The differential speed reducer 30 is combined with the turning motor 40 in the first through the fifth embodiments described above, but it is also possible to use a direct drive motor for the turning motor and omit the differential speed reducer 30.

The turning device 20 turns the front wheels 10 in the embodiments described above, but the turning devices can be provided on the front wheels and the rear wheels of the vehicle so that all four wheels can be turned.

The main device unit 20H of the turning device 20 is secured to the damper 17 and the turning output member 56 is secured to the hub carrier 15 in the embodiment described above, but it would also be possible to do the opposite and have the main device unit 20H of the turning device 20 secured to the hub carrier 15 and to have the turning output member 56 secured to the damper 17.

In the embodiments described above, the present invention is implemented for turning devices for vehicles equipped with a double wishbone suspension mechanism or a strut suspension mechanism. However, the turning device of the present invention can also be implemented for vehicles with a multi-link suspension mechanism.
A turning device that can be combined with a suspension mechanism without requiring significant modification to existing suspension mechanisms, and that provides a compact design when combined with a suspension mechanism. In a turning device according to the present invention, a main device unit, containing a turning motor and a differential speed reducer, and a turning output member that rotates relative to the main device unit are positioned roughly co-axially with a kingpin shaft. This makes it possible to reduce the amount by which the turning device projects in the direction perpendicular to the kingpin shaft. As a result, compared to conventional technologies, the turning device can be combined without significantly modifying the structure of an existing double wishbone suspension mechanism, and the overall structure that combines the double wishbone suspension mechanism and the turning device can be made compact.

## Claims

1. A turning device in a vehicle comprising:
a suspension mechanism including:
a hub carrier rotatably supporting a hub disc which is secured to a turning wheel, and
a movable arm extended roughly horizontally between the hub carrier and a main vehicle body and that can tilt up and down, one of said turning device being provided for each of said turning wheel to turn said turning wheel,
said turning device comprising:
a turning motor positioned roughly co-axial to a kingpin axis, which serves as a turning center of said turning wheel;
a main device unit positioned roughly co-axial to the kingpin axis and containing a stator of said turning motor; and
a turning output section positioned roughly co-axial to the kingpin axis and rotated relative to said main device unit by said turning motor;
wherein said main device unit is secured to said hub carrier and said turning output section is secured to said movable arm by way of a constant velocity joint, or said turning output section is secured to said hub carrier and said main device unit is secured to said movable arm by way of a constant velocity joint.

2. The turning device according to claim 1 wherein said suspension mechanism is a double wishbone suspension mechanism equipped with an upper arm and a lower arm that face each other and serve as said movable arm, said hub carrier being supported between ends of said upper arm and said lower arm; and
wherein said main device unit is positioned in a region between said upper arm and said lower arm and is secured to said hub carrier.

3. The turning device according to claim 1 wherein said suspension mechanism is a double wishbone suspension mechanism equipped with an upper arm and a lower arm that face each other and serve as said movable arm, said hub carrier being supported between ends of said upper arm and said lower arm; and
wherein said main device unit is secured to an upper surface side of said upper arm or a lower surface side of said lower arm.

4. The turning device according to claim 1 wherein said suspension mechanism is a strut suspension mechanism,
wherein, said movable arm connects to a lower end of said hub carrier, and an upper end of said hub carrier connects to said main vehicle body by a damper extending co-axial with said kingpin axis; and
wherein said main device unit is positioned in a region between said movable arm and said damper and is secured to said hub carrier.

5. The turning device according to claim 1 wherein said suspension mechanism is a strut suspension mechanism,
wherein, said movable arm connects to a lower end of said hub carrier, and an upper end of said hub carrier is connected with said main vehicle body by a damper extending co-axial with said kingpin axis; and
wherein said main device unit is secured to a lower surface side of said movable arm.

6. A turning device in a vehicle comprising:
a strut suspension mechanism including a hub carrier rotatably supporting a hub disc which is secured to a turning wheel and a movable arm extended roughly horizontally between a lower end of said hub carrier and a main vehicle body and that can tilt up and down relative to said main vehicle body, and a damper positioned co-axial with a kingpin axis, serving as a turning center for said turning wheel, said damper extending diagonally upward from an upper end of said hub carrier and expanding and contracting between said main vehicle body and said hub carrier, one of said turning device being provided for each of said turning wheel to turn said turning wheel;
said turning device comprising:
a turning motor positioned roughly co-axial to said kingpin axis;
a main device unit positioned roughly co-axial to said kingpin axis and containing a stator of said turning motor; and
a turning output section positioned roughly co-axial to said kingpin axis and rotated relative to said main device unit by said turning motor; and
whereby said main device unit is positioned between a lower end of said damper and an upper end of said hub carrier, said main device unit being secured to said lower end of said damper and said turning output section being secured to said upper end of said hub carrier, or said main device unit being secured to said upper end of said hub carrier and said turning output section being secured to said lower end of said damper.

7. The turning device according to any one of claims 1 to 6wherein said main device unit further comprises a speed reducer turning:
with an input shaft; and
an output shaft positioned co-axially with said input shaft;
wherein said input shaft of said speed reducer is connected to a rotation shaft of said turning motor while said output shaft of said speed reducer is connected to said turning output section.

8. The turning device according to any one of claims 1 to 7 wherein:
said turning motor is a direct drive motor, a stator of said direct drive motor forms said main device unit, and a rotor of said direct drive motor forms said turning output section.

9. The turning device according to claim 1 wherein said suspension mechanism is a multi-link suspension mechanism.

10. A turning device in a vehicle comprising:
a multi-link suspension mechanism including a hub carrier rotatably supporting a hub disc to which is secured a turning wheel and a movable arm extended roughly horizontally between a lower end of said hub carrier and said main vehicle body and that can tilt up and down relative to said main vehicle body, and a damper positioned along an axis parallel with a kingpin axis, serving as a turning center for said turning wheel, said damper extending diagonally upward from an upper end of said hub carrier and expanding and contracting between said main vehicle body and said hub carrier, one of said turning device being provided for each of said turning wheel to turn said turning wheel;
said turning device comprising:
a turning motor positioned roughly co-axial to said kingpin axis;
a main device unit positioned roughly co-axial to said kingpin axis and containing a stator of said turning motor; and
a turning output section positioned roughly co-axial to said kingpin axis and rotated relative to said main device unit by said turning motor; and
wherein said main device unit is positioned between a link member secured to said damper and an upper end of said hub carrier, said main device unit being secured to said link member and said turning output section being secured to said upper end of said hub carrier, or said main device unit being secured to said upper end of said hub carrier and said turning output section being secured to said link member.
